(19) Europäisches Patentamt / European Patent Office / Office européen des brevets

(11) **EP 4 148 286 B1**

(12) **FASCICULE DE BREVET EUROPEEN**

(45) Date de publication et mention
de la délivrance du brevet:
**24.01.2024 Bulletin 2024/04**

(21) Numéro de dépôt: **22193646.1**

(22) Date de dépôt: **02.09.2022**

(51) Classification Internationale des Brevets (IPC):
**F16B 2/08** *(2006.01)*

(52) Classification Coopérative des Brevets (CPC):
**F16B 2/08**

(54) **BRIDAGE PAR SANGLE CONTRAINTE**

BEFESTIGUNG MIT SPANNGURT

CLAMPING BY CONSTRAINED STRAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2021 FR 2109539**

(43) Date de publication de la demande:
**15.03.2023 Bulletin 2023/11**

(73) Titulaire: **Sagemcom Broadband SAS**
**92270 Bois-Colombes (FR)**

(72) Inventeur: **SIRON, Daniel**
**92500 RUEIL MALMAISON (FR)**

(74) Mandataire: **Lavaud, Thomas**
**Cabinet Boettcher**
**5, rue de Vienne**
**75008 Paris (FR)**

(56) Documents cités:
**JP-U- H0 225 389     US-A1- 2011 233 377**
**US-B1- 6 185 303**

**Description**

L'invention concerne le domaine des systèmes de fixation d'équipements sur des supports

ARRIERE PLAN DE L'INVENTION

Certains équipements, et notamment des modules de télécommunication permettant d'améliorer la puissance des signaux, sont destinés à être fixés sur un support par l'utilisateur qui vient d'en faire l'acquisition.

Il existe par exemple des amplificateurs 5G (*booster*) qui sont destinés à améliorer la couverture du réseau 5G. L'utilisateur en possession de l'équipement doit fixer lui-même l'équipement sur un support quelconque à l'extérieur de son habitation, par exemple sur un poteau, un mât, une descente de gouttière, une barre du garde-corps d'un balcon, etc.

L'équipement doit donc être muni d'un système de fixation simple à utiliser, ne nécessitant pas d'outil, et permettant à toute personne, et notamment aux personnes peu bricoleuses, de fixer efficacement l'équipement sur son support.

Comme le support utilisé peut être de différentes formes et de différentes dimensions, un tel système de fixation comporte classiquement une sangle qui est ajustée et serrée par l'utilisateur autour du support.

L'effort de serrage doit être appliqué correctement pour garantir une fixation correcte et durable.

On connaît des systèmes de bridage qui garantissent le maintien sous contrainte.

Par exemple, les sauterelles de serrage permettent d'assurer un verrouillage lorsque la position de point d'équilibre (alignement des points d'articulation) est dépassée. Cependant, les sauterelles de serrage ne possèdent pas de latitude de réglage significative, et l'utilisateur doit donc être capable d'apprécier si l'effort de serrage est suffisant.

On connaît aussi un système de bride métallique qui permet de fixer un module 5G extérieur sur un support. Ce système de bride métallique permet un préréglage grossier et une mise en pression au moyen d'une vis papillon, mais la contrainte de mise en pression est très dépendante de l'effort de serrage appliqué par l'utilisateur. A nouveau, l'utilisateur doit avoir la capacité d'apprécier si l'effort de serrage est suffisant.

La qualité de la fixation va donc dépendre des capacités de l'utilisateur en la matière. Ceci est très problématique, car l'utilisateur n'est pas un professionnel et ses compétences en mécanique/bricolage sont souvent limitées. Il est donc fréquent que les équipements soient mal fixés, ou bien endommagés par un serrage mal maîtrisé.

Le document US 6 185 303 B1 divulgue un support pour monter un boîtier sur une structure de support, et en particulier un kit de support de montage pour monter de manière amovible un boîtier sur un poteau.

OBJET DE L'INVENTION

L'invention a pour objet un système de fixation permettant de fixer un équipement sur un support, qui soit simple à utiliser, qui ne nécessite pas d'outil, et qui permette d'obtenir un effort de serrage adapté, suffisant et indépendant de l'utilisateur.

RESUME DE L'INVENTION

En vue de la réalisation de ce but, on propose un système de fixation, agencé pour fixer un équipement à un support, comportant :

- une sangle destinée à entourer le support et à maintenir le système de fixation sur le support ;
- un dispositif élastique et une butée mécanique ;
- un dispositif de réglage d'une longueur de la sangle ;
- au moins une surface d'appui ;

le système de fixation étant agencé, lorsque la surface d'appui est positionnée contre le support et que la sangle entoure le support, de sorte qu'en réponse à une action manuelle de tirage sur une première extrémité de la sangle, le dispositif de réglage ajuste la longueur de la sangle à des dimensions du support, puis la sangle agit sur une première extrémité du dispositif élastique qui subit alors un allongement générant une force de tension de la sangle permettant de serrer celle-ci autour du support, la butée mécanique limitant l'allongement du dispositif élastique pour conférer à la force de tension une valeur prédéterminée.

Le système de fixation selon l'invention ne nécessite pas d'outil et est très simple à utiliser : il suffit de positionner le système de fixation sur le support, d'entourer le support avec la sangle, et de tirer sur la première extrémité de la sangle.

Le dispositif élastique, dont l'allongement est limité par la butée, permet de mettre en contrainte le bridage avec une tension calibrée, répétable, et indépendante d'une quelconque perception de l'utilisateur : l'effort de serrage dépend de l'allongement du dispositif élastique et non de l'action de l'utilisateur. Le serrage est maîtrisé quelles que soient la position, l'orientation, les dimensions et la forme du support. L'invention propose une grande latitude de réglage de longueur de la sangle tout en assurant une garantie de mise en tension sans ambiguïté.

On propose de plus un système de fixation tel que précédemment décrit, comportant en outre un dispositif d'ouverture et de verrouillage agencé pour, en réponse à une action manuelle d'ouverture, ouvrir le système de fixation et permettre ainsi de positionner la sangle autour du support, et pour, en réponse à une action manuelle de verrouillage, refermer et verrouiller le système de fixation.

On propose de plus un système de fixation tel que précédemment décrit, dans lequel le dispositif de réglage et le dispositif d'ouverture et de verrouillage sont intégrés dans un même module.

On propose de plus un système de fixation tel que précédemment décrit, dans lequel le module est une boucle clip réglable.

On propose de plus un système de fixation tel que précédemment décrit, comprenant, pour au moins l'une des surfaces d'appui, un évidement définissant deux portions d'appui distinctes de ladite surface d'appui, la sangle pouvant, en fonction de dimensions du support, passer dans l'évidement entre lesdites portions d'appui.

On propose de plus un système de fixation tel que précédemment décrit, comportant deux surfaces d'appui, ainsi qu'une platine de positionnement comprenant deux plaques sur lesquelles sont formées les deux surfaces d'appui, la platine de positionnement comprenant deux surfaces latérales auxquelles et entre lesquelles sont fixées les plaques.

On propose de plus un système de fixation tel que précédemment décrit, dans lequel les surfaces d'appui sont perpendiculaires entre elles.

On propose de plus un système de fixation tel que précédemment décrit, dans lequel le dispositif élastique est positionné au moins partiellement entre la platine de positionnement et l'équipement.

On propose de plus un système de fixation tel que précédemment décrit, chaque surface d'appui comprenant un patin anti-glissement.

On propose de plus un système de fixation tel que précédemment décrit, dans lequel une deuxième extrémité de la sangle est reliée à un premier point d'ancrage, la première extrémité du dispositif élastique est reliée au dispositif de réglage et/ou au dispositif d'ouverture et de verrouillage, une deuxième extrémité du dispositif élastique est reliée à un deuxième point d'ancrage, le premier point d'ancrage et le deuxième point d'ancrage étant fixes par rapport à la ou aux surfaces d'appui.

On propose de plus un système de fixation tel que précédemment décrit, dans lequel une deuxième extrémité de la sangle est reliée à la première extrémité du dispositif élastique.

On propose de plus un système de fixation tel que précédemment décrit, dans lequel le dispositif élastique comprend un ressort.

On propose de plus un système de fixation tel que précédemment décrit, dans lequel le dispositif élastique comprend plusieurs sous-éléments élastiques.

On propose de plus un système de fixation tel que précédemment décrit, comprenant en outre un dispositif d'orientation agencé pour permettre d'orienter l'équipement selon une orientation prédéfinie quelle que soit une orientation du support.

On propose de plus un système de fixation tel que précédemment décrit, le dispositif d'orientation étant agencé pour être positionné entre l'équipement et la platine de positionnement.

On propose de plus un système de fixation tel que précédemment décrit, comprenant en outre un rouleau de renvoi par lequel passe la sangle.

On propose de plus un système de fixation tel que précédemment décrit, dans lequel un coefficient de frottement statique de la sangle sur le support est inférieur à 0,2.

On propose de plus un ensemble d'équipement comprenant un équipement et un système de fixation tel que précédemment décrit.

On propose de plus un ensemble d'équipement tel que précédemment décrit, l'équipement étant un module de télécommunication.

On propose de plus un procédé de fixation d'un équipement sur un support, le procédé utilisant un système de fixation tel que précédemment décrit et comprenant les étapes de :

- positionner la ou les surfaces d'appui du système de fixation sur le support ;
- entourer le support avec la sangle ;
- tirer sur la première extrémité de la sangle jusqu'à une mise en butée du dispositif élastique.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente une vue en perspective, depuis l'arrière, d'un équipement et d'un système de fixation selon un premier mode de réalisation ;
[Fig. 2] la figure 2 représente une vue similaire à celle de la figure 1, depuis l'avant ;
[Fig. 3] la figure 3 représente une vue similaire à celle de la figure 1, depuis un côté ;
[Fig. 4] la figure 4 représente une vue en coupe, selon un plan vertical parallèle aux faces latérales du boîtier, de l'équipement et d'un système de fixation selon un deuxième mode de réalisation ;
[Fig. 5] la figure 5 représente une vue similaire à celle de la figure 4, avec un système de fixation selon un troisième mode de réalisation ;
[Fig. 6] la figure 6 représente une vue similaire à celle de la figure 4, avec un système de fixation selon un quatrième mode de réalisation ;
[Fig. 7] la figure 7 représente une vue similaire à celle de la figure 4, avec un système de fixation selon un cinquième mode de réalisation.

DESCRIPTION DETAILLEE DE L'INVENTION

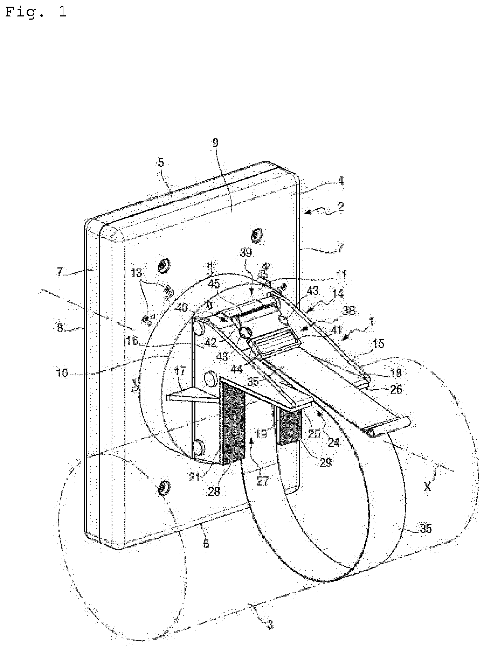

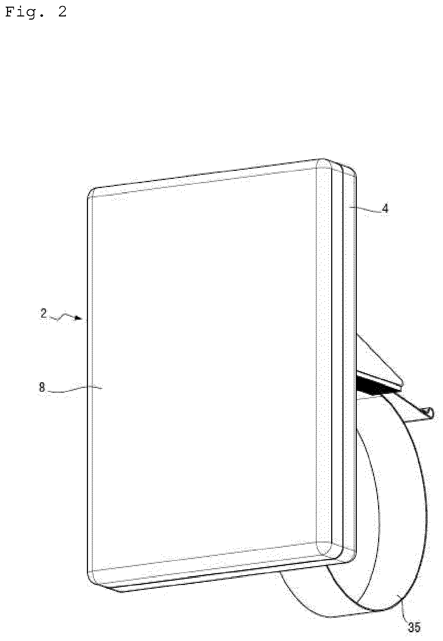

En référence aux figures 1 à 3, le support de fixation selon un premier mode de réalisation de l'invention 1 est destiné à fixer un équipement 2 à un support 3.

L'équipement 2 est ici un module de télécommunication, par exemple un amplificateur 5G. L'équipement 2 est ici destiné à être positionné en extérieur.

Le support 3 est ici un support horizontal, de forme tubulaire ayant une section circulaire. Le support 3 est par exemple une barre d'un garde-corps d'un balcon. Le diamètre de la section du support 3 est par exemple égal à 10cm. Dans d'autres exemples, le support 3 est un support vertical, ou le support 3 est un support orienté selon un plan quelconque.

L'équipement 2 comprend un boîtier 4 ayant ici une forme générale parallélépipédique aux bords arrondis. Bien sûr, l'invention peut être mise en oeuvre quelle que soit la forme du boîtier, qui pourrait donc être différente, par exemple tronconique.

La position préférentielle de fonctionnement de l'équipement 2 correspond à la position verticale et à l'orientation visibles sur les figures 1 à 3.

Le boîtier 4 de l'équipement 2 comprend une face supérieure 5, une face inférieure 6, deux faces latérales 7, une face avant 8 et une face arrière 9. Les termes « supérieur », « inférieur », « avant », « arrière » correspondent donc à un agencement de l'équipement 2 selon sa position préférentielle de fonctionnement.

Le système de fixation 1 s'étend depuis la face arrière 9 du boîtier 4 de l'équipement 2.

Le système de fixation 1 comprend tout d'abord une base 10 de forme cylindrique ayant un axe X perpendiculaire à la face arrière 9 du boîtier 4 de l'équipement 2. La base 10 s'étend depuis ladite face arrière 9. La base 10 comporte une face externe 11. Dans un autre exemple la base 10 est de forme polygonale.

La base 10 intègre optionnellement un dispositif d'orientation 12 de l'équipement 2, qui permet d'orienter manuellement l'équipement 2 de sorte que celui-ci puisse être orienté selon une orientation prédéfinie quelle que soit l'orientation du support 3. L'orientation prédéfinie correspond ici à la position préférentielle de fonctionnement de l'équipement 2.

Le dispositif d'orientation 12 comprend une portion fixe par rapport au reste du système de fixation 1, et une portion rotative, autour de l'axe X, par rapport à la portion fixe, la portion rotative étant fixe par rapport au boîtier 4 de l'équipement 2.

Une action manuelle, consistant à exercer une pression sur la portion rotative et donc sur l'équipement 2, permet de déverrouiller le dispositif d'orientation 12 (le déverrouillage pourrait alternativement être réalisé en exerçant une pression sur la portion fixe et donc sur le système de fixation). La portion rotative peut alors être entraînée manuellement en rotation par l'utilisateur pour orienter l'équipement 2 par rapport au système de fixation 1, et lui conférer l'orientation prédéfinie. Lorsque la pression est relâchée, le dispositif d'orientation 12 se verrouille et la portion rotative ne peut plus être entraînée en rotation (sauf à appuyer de nouveau sur l'arrière du système de fixation 1).

Le dispositif d'orientation 12 comprend aussi des repères 13 marqués sur la face arrière 9 du boîtier 4 de l'équipement 2, qui permettent de désigner les différentes orientations possibles de l'équipement 2.

Le dispositif d'orientation 12 permet donc de suivre l'inclinaison possible du support 3 afin que l'équipement 2 garde une orientation recommandée pour un bon fonctionnement. L'orientation est de préférence (mais pas nécessairement) conférée à l'équipement 2 préalablement à l'installation du système de fixation 1 sur le support 3.

Le système de fixation 1 comporte de plus une platine de positionnement 14 qui s'étend depuis la face externe 11 de la base 10. Le dispositif d'orientation 12 optionnel est donc positionné entre l'équipement 2 et la platine de positionnement 14. La platine de positionnement 14 est solidaire en rotation de la portion fixe du dispositif d'orientation 12.

La platine de positionnement 14 comprend une équerre de fixation 15 comprenant deux surfaces latérales 16 qui s'étendent depuis la face externe 11 de la base 10, perpendiculairement à celle-ci.

Des nervures 17 forment des renforts latéraux de positionnement des surfaces latérales 16.

La platine de positionnement 14 comporte une première plaque 18 s'étendant dans un premier plan P1 perpendiculaire à la face arrière 9 du boîtier 4 de l'équipement 2, et une deuxième plaque 19 s'étendant dans un deuxième plan P2 perpendiculaire au premier plan P1 et donc parallèle à la face arrière 9 du boîtier 4.

La première plaque 18 et la deuxième plaque 19 s'étendent entre les surfaces latérales 16 de l'équerre de fixation 15 en étant fixées auxdites surfaces latérales 16.

La première plaque 18 comprend une face inférieure sur laquelle est formée une première surface d'appui 20. La deuxième plaque 19 comprend une face arrière sur laquelle est formée la deuxième surface d'appui 21.

La platine de positionnement 14 comporte aussi un pied 22. Le pied 22 est formé par une plaque qui s'étend perpendiculairement depuis une face avant de la deuxième plaque 19 (opposée à la deuxième surface d'appui 21), et qui permet de fixer la platine de positionnement 14 à la face externe 11 de la base 10.

Dans un mode de réalisation, un premier évidement 24, de forme rectangulaire, est formé dans la première plaque 18. Le premier évidement 24 s'étend depuis une portion centrale du bord de la première plaque 18.

Le premier évidement 24 définit une première portion d'appui 25 et une deuxième portion d'appui 26 de la première surface d'appui 20, situées de part et d'autre du premier évidement 24.

Dans un mode de réalisation, un deuxième évidement 27, de forme rectangulaire, est formé dans la deuxième plaque 19. Le deuxième évidement 27 délimite une cavité longitudinale dans la platine 14. Le deuxième évidement 27 s'étend dans une portion centrale de la deuxième plaque 19, perpendiculairement au premier plan P1. Le deuxième évidement 27 définit une première portion d'appui 28 et une deuxième portion d'appui 29 de la deuxième surface d'appui 21, situées de part et d'autre du deuxième évidement 27.

Le premier évidement 24, respectivement le deuxième évidement 27, permet à la platine de positionnement 14 d'être compatible avec une large plage dimensionnelle de support 3. Cette large plage dimensionnelle est la cause du débattement des deux brins de la sangle 35, justifiant la présence du premier évidement 24 et du deuxième évidement 27.

Chaque surface d'appui 20, 21 comprend ici un patin qui est fixé (en étant par exemple collé, soudé, etc.) sur la plaque correspondante. Les patins permettent de ne pas endommager le support 3 (en le rayant par exemple). On note que chaque patin et la plaque associée (et même toute la platine) pourraient former une pièce unique.

Le système de fixation 1 comprend aussi un premier point d'ancrage 30 et un deuxième point d'ancrage 31, qui sont fixes par rapport à la platine de positionnement 14, et donc par rapport aux surfaces d'appui 20, 21, et donc par rapport au boîtier 4 de l'équipement 2 (tout au moins lorsque le dispositif d'orientation 12 est verrouillé). Le premier point d'ancrage 30 et le deuxième point d'ancrage 31 sont ici tous deux positionnés entre la deuxième plaque 19 et la face externe 11 de la base 10.

Chaque point d'ancrage 30, 31 comprend un axe fixé sur l'équerre de fixation 15, chaque extrémité dudit axe étant fixée à une surface latérale 16 distincte. Le système de fixation 1 comprend aussi un rouleau de renvoi 33, qui est monté rotatif autour d'un axe parallèle aux axes des points d'ancrage, ou qui comprend une matière lisse présentant peu d'adhérence. Le rouleau de renvoi 33 est positionné au niveau d'une portion supérieure de la face externe 11 de la base 10. Chaque extrémité du rouleau de renvoi 33 est fixée à une surface latérale 16 distincte.

Le système de fixation 1 comprend de plus une sangle principale 35 qui est destinée à entourer le support 3, et à maintenir le système de fixation 1 et donc l'équipement 2 sur le support 3.

La sangle principale 35 comporte une première extrémité 36 et une deuxième extrémité 37 qui est ici reliée au premier point d'ancrage 30. Plus précisément, la deuxième extrémité 37 de la sangle 35 a été passée autour de l'axe du premier point d'ancrage 30 puis repliée et fixée au reste de la sangle 35 (en étant par exemple collée, soudée, cousue, etc.).

On voit que, lorsque la sangle 35 entoure le support, elle peut passer, en fonction des dimensions dudit support 3, dans le premier évidement 24 et/ou dans le deuxième évidement 27 (lorsqu'ils sont respectivement présents).

Le système de fixation 1 comporte de plus un dispositif de réglage 38 de la longueur de la sangle, et un dispositif d'ouverture et de verrouillage 39.

Le dispositif de réglage 38 permet d'ajuster manuellement la longueur de la sangle 35 autour du support 3. Le dispositif de réglage 38 est anti-retour. Il peut être libéré par une action manuelle simple de l'utilisateur.

Le dispositif d'ouverture et de verrouillage 39 permet, en réponse à une action manuelle d'ouverture, d'ouvrir le système de fixation 1 et ainsi de positionner la sangle principale 35 autour du support 3. Le dispositif d'ouverture et de verrouillage 39 permet aussi, en réponse à une action manuelle de verrouillage, de refermer et verrouiller le système de fixation 1.

Le dispositif de réglage 38 et le dispositif d'ouverture et de verrouillage 39 sont ici intégrés dans un même module, en l'occurrence une boucle clip réglable 40. La boucle clip réglable 40 comprend une partie mâle 41 et une partie femelle 42.

La partie mâle 41 comporte un mécanisme d'emboîtement élastique mâle, comprenant trois dents dont deux dents externes 43 munies chacune au niveau de son extrémité libre d'un crochet orienté vers l'extérieur, ainsi que deux ouvertures 44.

La partie femelle 42 comporte un mécanisme d'emboîtement élastique femelle, complémentaire du mécanisme d'emboîtement élastique mâle, ainsi qu'une ouverture 45.

Le système de fixation 1 comporte aussi une sangle secondaire 46.

La sangle secondaire 46 comprend une première extrémité reliée à la partie femelle 42 de la boucle clip réglable 40 (en passant par l'ouverture 45).

La sangle secondaire 46 passe derrière le rouleau de renvoi 33 et comprend donc une première portion parallèle à la face arrière 9 du boîtier 4 et une deuxième portion qui s'étend selon la direction de la sangle principale 35.

La première extrémité 36 de la sangle principale 35, quant à elle, passe dans l'une puis l'autre des ouvertures 44 de la partie mâle 41 de la boucle clip réglable 40, ce qui permet, en tirant sur la première extrémité 36 de la sangle principale 35, de régler sa longueur (ou, plus exactement, de régler la longueur de la portion de la sangle principale 35 qui serre le support 3).

Le système de fixation 1 comprend de plus un dispositif élastique, qui est en l'occurrence un ressort métallique de traction 50.

Une première extrémité du ressort 50 est reliée au dispositif de réglage 38 et/ou au dispositif d'ouverture et de verrouillage 39. Ici, la première extrémité du ressort 50 est reliée à la deuxième extrémité de la sangle secondaire 46 via une boucle 51 (et donc à la boucle clip réglable 40 via la boucle 51 et la sangle secondaire 46).

Une deuxième extrémité du ressort 50 est reliée au deuxième point d'ancrage 31.

Le ressort 50 est positionné entre la deuxième plaque 19 de la platine de positionnement 14 et le dispositif d'orientation 12. Le ressort 50 est situé entre les deux surfaces latérales 16 de l'équerre de fixation 15 en étant très proche de la face externe 11 de la base 10. Cette position du ressort permet d'améliorer la compacité du système de fixation 1.

Le ressort 50 s'étend et s'allonge selon une direction perpendiculaire au premier plan P1 et parallèle au deuxième plan P2. Cette configuration n'est bien sûr pas obligatoire.

Il est avantageux que la raideur du ressort 50 ne soit pas trop élevée afin de rendre le dispositif assez précis.

On rappelle que, pour un ressort linéaire, on a :

$$K = F / A,$$

K étant la raideur (en N/mm), F la force (en N) et A l'allongement (en mm).

Avantageusement, la raideur du ressort est comprise entre 1 et 2,5N/mm.

Pour un ressort de torsion, on a :

$$K = C / \theta,$$

K étant la raideur (en N.m/rad), C le couple (en N.m) et θ l'angle (en rad) entre les extrémités du ressort.

Ici, le ressort 50 (linéaire) mesure 30mm non allongé, et s'allonge de 30mm ; sa longueur lorsqu'il est allongé est donc de 60mm. Il produit une tension de 50N dans la sangle 35, ce qui donne une raideur d'1,66N/mm.

Le système de fixation 1 comprend de plus une butée mécanique 52, qui s'étend sous le rouleau de renvoi 33 depuis une portion supérieure de la face externe 11 de la base 10. La butée 52 est située en regard de la première extrémité du ressort 50.

On décrit maintenant la manière dont fonctionne le système de fixation 1.

L'utilisateur exerce une action manuelle d'ouverture sur le dispositif d'ouverture et de verrouillage 39 pour ouvrir le système de fixation 1. L'action manuelle d'ouverture consiste simplement à appuyer sur les dents externes 43 de la partie mâle 41 de la boucle clip réglable 40, et d'éloigner ladite partie mâle 41 de la partie femelle 42.

L'utilisateur présente alors la platine de positionnement 14 contre le support 3. La première surface d'appui 20 et la deuxième surface d'appui 21 sont appliquées contre le support 3.

L'utilisateur enroule (cercle) la sangle principale 35 autour du support 3, puis exerce une action manuelle de verrouillage sur le dispositif d'ouverture et de verrouillage 39 pour refermer et verrouiller le système de fixation 1. L'action manuelle de verrouillage consiste simplement à emboîter la partie mâle 41 de la boucle clip réglable 40 dans la partie femelle 42.

L'utilisateur exerce alors une action manuelle de tirage sur la première extrémité 36 de la sangle 35 (à la manière d'une bretelle de sac à dos).

Le dispositif de réglage 38 ajuste ainsi la longueur de la sangle 35 aux dimensions du support 3, puis la sangle 35 agit sur la première extrémité du ressort 50 via la boucle clip réglable 40, la sangle secondaire 46, le rouleau de renvoi 33 et la boucle 51, de sorte que le ressort 50 subit un allongement qui génère une force de tension de la sangle 35 permettant de serrer celle-ci autour du support 3.

La butée mécanique 52 limite l'allongement du ressort 50 pour conférer à la force de tension - et à l'effort de serrage - une valeur prédéterminée. L'effort de serrage est dépendant de l'allongement du ressort 50, qui est prédéfini. Lorsque la première extrémité du ressort 50 vient en butée, il n'est plus possible de tirer davantage. Ainsi, la sangle 35 est en tension, le ressort 50 est à son allongement maximal d'une longueur connue, et donc l'effort de tension est connu, maîtrisé et répétable.

Le bridage est ainsi mis en contrainte avec une tension calibrée, répétable et indépendante d'une quelconque perception de l'utilisateur.

Lors de la mise sous tension de la sangle, il convient de maintenir l'ensemble d'équipement (équipement 2 plus système de fixation 1) à l'aide de la seconde main pour l'empêcher de tourner autour du support 3.

Lorsqu'ils sont respectivement présents, on note que, lorsque la sangle 35 entoure le support 3, elle passe à la fois dans le premier évidement 24 de la première plaque 18 de la platine de positionnement 14, et donc entre la première portion d'appui 25 et la deuxième portion d'appui 26 de la première surface d'appui 20, et dans le deuxième évidement 27 de la deuxième plaque 19, entre la première portion d'appui 28 et la deuxième portion d'appui 29 de la deuxième surface d'appui 21.

Chaque bord latéral de la sangle 35 s'étend donc dans un plan passant entre la première portion d'appui 25 et la deuxième portion d'appui 26 de la première surface d'appui 20, et entre la première portion d'appui 28 et la deuxième portion d'appui 29 de la deuxième surface d'appui 21.

La traction de la sangle 35 s'effectue donc entre la première portion d'appui 25 et la deuxième portion d'appui 26 de la première surface d'appui 20, et va donc plaquer la première portion d'appui 25 et la deuxième portion d'appui 26 sur le support 3 de manière à obtenir une répartition équivalente des efforts d'appui sur les portions d'appui 25, 26. De même, la traction de la sangle 35, entre la première portion d'appui 28 et la deuxième portion d'appui 29 de la deuxième surface d'appui 21, permet d'obtenir une répartition équivalente des efforts d'appui sur les portions d'appui 28, 29. On augmente ainsi la stabilité latérale du système de fixation 1 et donc de l'équipement 2 sur le support 3.

Par ailleurs, le premier évidement 24 et le deuxième évidement 27 permettent à la sangle 35 d'être libre de se déformer lors du serrage. Il est donc possible de serrer efficacement la sangle autour de supports ayant différentes formes (section ronde, carrée, rectangulaire, prismatique, etc.) et de différentes dimensions.

On note qu'avantageusement, la sangle 35 est une sangle souple et non élastique, ce qui permet de ne pas contrarier la tare du ressort 50.

De même, avantageusement, la sangle 35 est glissante, pour que la tension de serrage se répartisse bien sur toute la surface de la sangle 35 et du support 3.

La sangle 35 doit donc être fabriquée avec une matière peu adhérente.

Le coefficient de frottement statique de la sangle 35 sur le support est donc de préférence inférieur à un seuil prédéterminé (qui varie selon le matériau du support : plastique, zinc, alliage d'aluminium, acier peint, etc.). Avantageusement, le coefficient de frottement statique de la sangle 35 sur le support est inférieur à 0,2.

Pour un support en plastique PVC lisse, le seuil prédéterminé est égal à 0,15.

On note que la sangle peut aussi être traitée à coeur ou en surface pour obtenir cette qualité de faible adhérence.

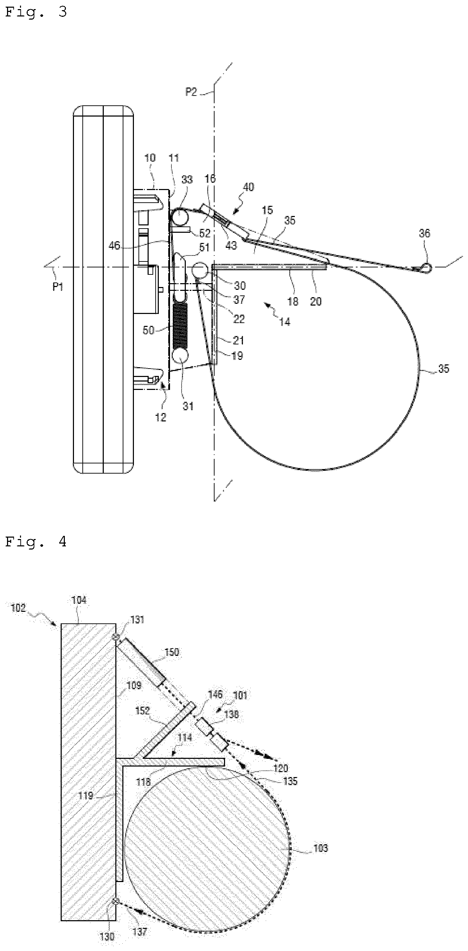

En référence à la figure 4, on décrit maintenant un système de fixation 101 selon un deuxième mode de réalisation, qui permet de fixer l'équipement 102 sur le support 103.

Cette fois, le système de fixation 101 ne comporte pas de dispositif d'orientation de l'équipement 102.

Ici, la deuxième plaque 119 de la platine de positionnement 114 est directement fixée sur la face arrière 109 du boîtier 104 de l'équipement 102.

Le système de fixation 101 comporte un premier point d'ancrage 130 situé au niveau d'une extrémité inférieure de la face arrière 109 du boîtier 104, et un deuxième point d'ancrage 131 situé au niveau d'une extrémité supérieure de la face arrière 109 du boîtier 104.

La deuxième extrémité 137 de la sangle principale 135 est reliée au premier point d'ancrage 130, et la deuxième extrémité du dispositif élastique 150 au deuxième point d'ancrage 131.

La première extrémité du dispositif élastique 150 est reliée au dispositif d'ouverture et de verrouillage 138 via une sangle secondaire 146 qui, cette fois, ne passe pas derrière un rouleau de renvoi.

La butée mécanique 152 est positionnée directement sur la platine de positionnement 114. La butée mécanique 152 s'étend depuis la face supérieure de la première plaque 118, la première surface d'appui 120 s'étendant quant à elle sur la face inférieure de ladite première plaque 118. La butée mécanique 152 est inclinée vers le haut et vers l'arrière.

Ici, le dispositif de réglage 138 et le dispositif d'ouverture et de verrouillage 139 sont deux éléments distincts.

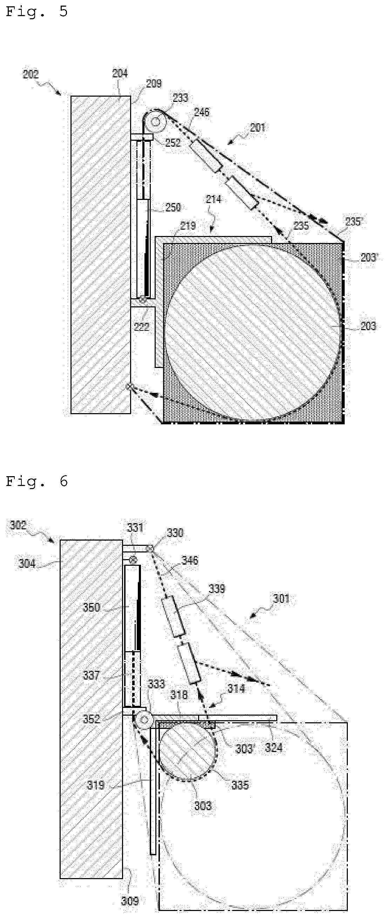

En référence à la figure 5, on décrit maintenant un système de fixation 201 selon un troisième mode de réalisation.

Le système de fixation 201 ne comporte pas de dispositif d'orientation de l'équipement 202.

La deuxième plaque 219 de la platine de positionnement 214 est fixée à la face arrière 209 du boîtier 204 de l'équipement 202 par un pied 222.

Le ressort 250 est positionné (au moins partiellement) entre la face arrière 209 du boîtier 204 de l'équipement 202 et la deuxième plaque 219.

La butée 252 s'étend depuis une portion supérieure de la face arrière 209 du boîtier 204 de l'équipement 202, perpendiculairement à celle-ci.

Un rouleau de renvoi 233 est positionné au-dessus de la butée 252, et la sangle secondaire 246 passe derrière le rouleau de renvoi 233.

On voit sur la figure 5 que la platine de positionnement 214 permet de positionner le système de fixation 201 (et donc l'équipement 202) sur un support pouvant prendre des formes différentes, et notamment la forme d'un tube de section circulaire (support 203) ou la forme d'un tube de section carrée (support 203').

La référence 235 correspond à la forme prise par la sangle principale lors du serrage, dans le cas du support de section circulaire. La référence 235' correspond à la forme prise par la sangle lors du serrage, dans le cas du support de section carrée.

On note que, par rapport à la figure 4, la relocalisation du ressort 250 permet de compacter le système de fixation 201 et/ou de réduire la raideur du ressort 250.

En référence à la figure 6, on décrit maintenant un système de fixation 301 selon un quatrième mode de réalisation.

Le système de fixation 301 comporte un premier point d'ancrage 330 et un deuxième point d'ancrage 331, qui sont tous deux positionnés au niveau d'une extrémité supérieure de la face arrière 309 du boîtier 304 de l'équipement 302.

Le ressort 350 est positionné à proximité de la face arrière 309, au-dessus de la platine de positionnement 314.

Le système de fixation 301 comprend un rouleau de renvoi 333.

La sangle principale 335 passe derrière le rouleau de renvoi 333, entoure le support 303, puis passe au travers du premier évidement 324 formé dans la première plaque 318.

La deuxième extrémité 337 de la sangle 336 est directement reliée à la première extrémité du ressort 350. La deuxième extrémité du ressort 350 est reliée au deuxième point d'ancrage 331.

La butée 352 s'étend perpendiculairement depuis la face arrière 309.

On remarque que les positions du rouleau de renvoi 333, de la butée 352 et de l'angle droit formé par l'intersection de la première plaque 318 et de la deuxième plaque 319, selon une direction parallèle à la longueur du boîtier 304, sont à peu près identiques. Le rouleau de renvoi 333 est situé entre l'angle droit et l'équipement 302. La butée 352 est légèrement au-dessus du rouleau de renvoi 333.

La sangle secondaire 346 comporte une première extrémité reliée au premier point d'ancrage 330 et une deuxième extrémité reliée au dispositif d'ouverture et de verrouillage 339.

On voit que la platine de positionnement 314 est compatible avec une large plage dimensionnelle de support, notamment grâce au premier évidement, respectivement deuxième évidement. Ici, le support 303 a la forme d'un tube de section circulaire et de diamètre réduit par rapport aux tubes des figures précédentes. Le diamètre de la section du support 303 est par exemple égal à 3cm.

Le support pourrait aussi être un support 303' ayant la forme d'un tube de section rectangulaire de largeur et de longueur réduites.

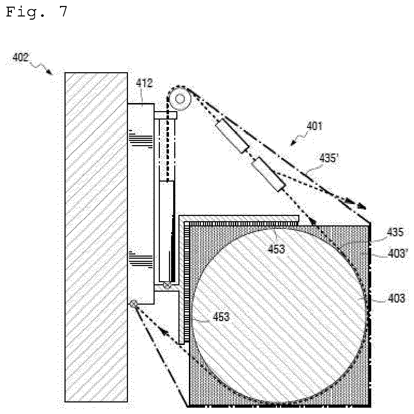

En référence à la figure 7, on décrit maintenant un système de fixation 401 selon un cinquième mode de réalisation.

Ce mode de réalisation est très proche du mode de réalisation de la figure 5, si ce n'est que le système de fixation 401 comporte un dispositif d'orientation 412 de l'équipement 402.

Par ailleurs, les patins 453 formant les surfaces d'appui sont ici des patins anti-glissement, fabriqués avec un matériau empêchant les surfaces d'appui de glisser sur le support. Le coefficient d'adhérence, sur le support, du matériau utilisé pour fabriquer les patins, est avantageusement supérieur à 0,5.

L'utilisation de tels patins est avantageuse. Ces patins permettent de limiter la rotation du système de fixation 401 autour du support 403 (ou 403') lors de la mise sous tension de la sangle principale 435 (ou 435'). Le système de fixation 401 peut alors être monté sur le support sans qu'il soit nécessaire, lorsque la première extrémité de la sangle principale est tirée pour ajuster sa longueur et serrer le support, de maintenir le système de fixation 401 (et/ou l'équipement 402) à l'aide de la seconde main pour l'empêcher de tourner autour du support.

De plus, comme on l'a vu, l'équipement 402 est ici positionné à l'extérieur et peut être soumis à différentes contraintes environnementales, et notamment au vent, qui tendent à desserrer le système de fixation. Les patins anti-glissement 453 permettent d'empêcher le desserrement du système de fixation 401.

Bien entendu, l'invention n'est pas limitée aux modes de réalisation décrits mais englobe toute variante entrant dans le champ de l'invention telle que définie par les revendications.

Le dispositif élastique n'est pas nécessairement un ressort métallique de traction : tout type de dispositif élastique pourrait être utilisé. Il peut s'agir d'un ressort non métallique, ou bien d'un ressort de compression, de torsion, d'un ressort épingle, etc. Le dispositif élastique pourrait être constitué d'anneaux élastiques (en caoutchouc par exemple), voire même d'une simple bande élastique.

Le dispositif élastique peut comprendre plusieurs sous-éléments élastiques distincts, par exemple associés en parallèle. La longueur maximale d'allongement de ces sous-éléments élastique est réduite en comparaison à un dispositif élastique ne comprenant qu'un seul élément de traction. Par exemple, le dispositif élastique peut comprendre plusieurs ressorts associés en parallèle, de longueur réduite, au lieu d'un seul ressort de longueur supérieure. Un tel dispositif élastique a un encombrement limité et permet de réduire la taille du système de fixation. Les sous-éléments élastiques ne sont pas nécessairement associés en parallèle, mais peuvent être associés en série, en « V », etc., ou bien selon une configuration mixte.

La butée mécanique n'est pas nécessairement un élément mécanique distinct mais peut être l'un des autres éléments du système (par exemple l'une des plaques de la platine de positionnement, le rouleau de renvoi, un élément du boîtier de l'équipement, etc.), ou bien être intégrée dans le ressort.

Le dispositif de réglage et le dispositif d'ouverture et de verrouillage pourraient être intégrés dans un autre type de module. Le dispositif de réglage et le dispositif d'ouverture et de verrouillage pourraient aussi constituer deux éléments distincts. Le dispositif de réglage pourrait par exemple être une boucle à came.

Le système de fixation peut appartenir à l'équipement, ou bien être rapporté sur l'équipement et fixé à celui-ci.

La ou les surfaces d'appui peuvent être intégrées directement dans le boîtier (sans platine de positionnement). La ou les surfaces d'appui sont alors éventuellement conformées pour venir en appui sur un support de forme particulière.

L'équipement peut être tout type d'équipement électronique ou non, de télécommunication ou non, filaire ou sans fil, etc. L'équipement peut être un module transmetteur amplificateur 5G. Dans d'autres exemples, l'équipement est un émetteur/récepteur bi-mode 3G/4G, un point d'accès ou extender selon la technologie Wi-Fi, ou un dispositif combinant différentes technologies de communications sans-fil.

**Revendications**

1. Système de fixation (1), agencé pour fixer un équipement (2) à un support (3), comportant :

   - une sangle (35) destinée à entourer le support et à maintenir le système de fixation sur le support ;
   - un dispositif élastique (50) et une butée mécanique (52) ;
   - un dispositif de réglage (38) d'une longueur de la sangle ;
   - au moins une surface d'appui (20, 21) ;

   le système de fixation étant agencé, lorsque la surface d'appui est positionnée contre le support et que la sangle entoure le support, de sorte qu'en réponse à une action manuelle de tirage sur une première extrémité (36) de la sangle, le dispositif de réglage ajuste la longueur de la sangle à des dimensions du support, puis la sangle agit sur une première extrémité du dispositif élastique qui subit alors un allongement générant une force de tension de la sangle permettant de serrer celle-ci autour du support, la butée mécanique limitant l'allongement du dispositif élastique pour conférer à la force de tension une valeur prédéterminée.

**2.** Système de fixation selon la revendication 1, comportant en outre un dispositif d'ouverture et de verrouillage (39) agencé pour, en réponse à une action manuelle d'ouverture, ouvrir le système de fixation et permettre ainsi de positionner la sangle autour du support, et pour, en réponse à une action manuelle de verrouillage, refermer et verrouiller le système de fixation.

**3.** Système de fixation selon la revendication 2, dans lequel le dispositif de réglage (38) et le dispositif d'ouverture et de verrouillage (39) sont intégrés dans un même module.

**4.** Système de fixation selon la revendication 3, dans lequel le module est une boucle clip réglable (40).

**5.** Système de fixation selon la revendication 1, comprenant, pour au moins l'une des surfaces d'appui, un évidement (24, 27) définissant deux portions d'appui distinctes de ladite surface d'appui, la sangle (35) pouvant, en fonction de dimensions du support, passer dans l'évidement entre lesdites portions d'appui.

**6.** Système de fixation selon l'une des revendications précédentes, comportant deux surfaces d'appui (20, 21), ainsi qu'une platine de positionnement (14) comprenant deux plaques (18, 19) sur lesquelles sont formées les deux surfaces d'appui (20, 21), la platine de positionnement comprenant deux surfaces latérales (16) auxquelles et entre lesquelles sont fixées les plaques.

**7.** Système de fixation selon la revendication 6, dans lequel les surfaces d'appui (20, 21) sont perpendiculaires entre elles.

**8.** Système de fixation selon la revendication 6, dans lequel le dispositif élastique (50) est positionné au moins partiellement entre la platine de positionnement (14) et l'équipement (2).

**9.** Système de fixation selon l'une des revendications précédentes, chaque surface d'appui comprenant un patin anti-glissement (453).

**10.** Système de fixation selon l'une des revendications précédentes, dans lequel une deuxième extrémité (37) de la sangle (35) est reliée à un premier point d'ancrage (30), la première extrémité du dispositif élastique (50) est reliée au dispositif de réglage (38) et/ou au dispositif d'ouverture et de verrouillage (39), une deuxième extrémité du dispositif élastique (50) est reliée à un deuxième point d'ancrage (31), le premier point d'ancrage et le deuxième point d'ancrage étant fixes par rapport à la ou aux surfaces d'appui.

**11.** Système de fixation selon l'une des revendications 1 à 9, dans lequel une deuxième extrémité (337) de la sangle est reliée à la première extrémité du dispositif élastique.

**12.** Système de fixation selon l'une des revendications précédentes, dans lequel le dispositif élastique (50) comprend un ressort.

**13.** Système de fixation selon l'une des revendications précédentes, dans lequel le dispositif élastique comprend plusieurs sous-éléments élastiques.

**14.** Système de fixation selon l'une des revendications précédentes, comprenant en outre un dispositif d'orientation (12) agencé pour permettre d'orienter l'équipement selon une orientation prédéfinie quelle que soit une orientation du support.

**15.** Système de fixation selon la revendication 6 et la revendication 14, le dispositif d'orientation étant agencé pour être positionné entre l'équipement (2) et la platine de positionnement (14).

**16.** Système de fixation selon l'une des revendications précédentes, comprenant en outre un rouleau de renvoi (33) par lequel passe la sangle.

**17.** Système de fixation selon l'une des revendications précédentes, dans lequel un coefficient de frottement statique de la sangle (35) sur le support (3) est inférieur à 0,2.

**18.** Ensemble d'équipement comprenant un équipement et un système de fixation selon l'une des revendications précédentes.

**19.** Ensemble d'équipement selon la revendication 18, l'équipement étant un module de télécommunication.

**20.** Procédé de fixation d'un équipement (2) sur un support (3), le procédé utilisant un système de fixation (1) selon l'une des revendications précédentes et comprenant les étapes de :

    - positionner la ou les surfaces d'appui (20, 21) du système de fixation sur le support ;
    - entourer le support avec la sangle (35) ;

- tirer sur la première extrémité de la sangle jusqu'à une mise en butée du dispositif élastique (50).

## Patentansprüche

1. Befestigungssystem (1), das ausgebildet ist, eine Ausrüstung (2) an einem Träger (3) zu befestigen, umfassend:

   - einen Gurt (35), der dazu bestimmt ist, den Träger zu umschließen und das Befestigungssystem an dem Träger zu halten;
   - eine elastische Vorrichtung (50) und einen mechanischen Anschlag (52);
   - eine Einstellvorrichtung (38) zum Einstellen einer Länge des Gurts;
   - mindestens eine Anlagefläche (20, 21);

   wobei das Befestigungssystem, wenn die Anlagefläche an dem Träger positioniert ist und wenn der Gurt den Träger umschließt, derart ausgebildet ist, dass in Antwort auf eine manuelle Ziehaktion an einem ersten Ende (36) des Gurts, die Einstellvorrichtung die Länge des Gurt auf die Abmessungen des Trägers einstellt, dann der Gurt auf ein erstes Ende der elastischen Vorrichtung einwirkt, welche dann eine Dehnung erfährt, die eine Spannkraft zum Spannen des Gurts erzeugt, die dessen Festspannen um den Träger ermöglicht, wobei der mechanische Anschlag die Dehnung der elastischen Vorrichtung begrenzt, um der Spannkraft einen vorbestimmten Wert zu verleihen.

2. Befestigungssystem nach Anspruch 1, ferner umfassend eine Öffnungs- und Verriegelungsvorrichtung (39), die ausgebildet ist, in Antwort auf eine manuelle Öffnungsaktion das Befestigungssystem zu öffnen und so ein Positionieren des Gurts um den Träger zu ermöglichen, und in Antwort auf eine manuelle Verriegelungsaktion das Befestigungssystem wieder zu schließen und zu verriegeln.

3. Befestigungssystem nach Anspruch 2, bei dem die Einstellvorrichtung (38) und die Öffnungs- und Verriegelungsvorrichtung (39) in ein und dasselbe Modul integriert sind.

4. Befestigungssystem nach Anspruch 3, bei dem das Modul ein einstellbarer Clipverschluss (40) ist.

5. Befestigungssystem nach Anspruch 1, umfassend, für mindestes eine der Anlageflächen, eine Aussparung (24, 27), die zwei getrennte Anlageabschnitte der genannten Anlagefläche definiert, wobei der Gurt (35) in Abhängigkeit der Abmessungen des Trägers in der Aussparung zwischen den genannten Anlageabschnitten laufen kann.

6. Befestigungssystem nach einem der vorhergehenden Ansprüche, umfassend zwei Anlageflächen (20, 21) sowie eine Positionierungsplatte (14), die zwei Platten (18, 19) umfasst, an denen die beiden Anlageflächen (20, 21) ausgebildet sind, wobei die Positionierungsplatte zwei Seitenflächen (16) umfasst, an denen und zwischen denen die Platten befestigt sind.

7. Befestigungssystem nach Anspruch 6, bei dem die Anlageflächen (20, 21) zueinander senkrecht sind.

8. Befestigungssystem nach Anspruch 6, bei dem die elastische Vorrichtung (50) zumindest teilweise zwischen der Positionierungsplatte (14) und der Ausrüstung (2) positioniert ist.

9. Befestigungssystem nach einem der vorhergehenden Ansprüche, wobei jede Anlagefläche einen Antirutschgleiter (453) umfasst.

10. Befestigungssystem nach einem der vorhergehenden Ansprüche, bei dem ein zweites Ende (37) des Gurts (35) mit einem ersten Verankerungspunkt (30) verbunden ist, das erste Ende der elastischen Vorrichtung (50) mit der Einstellvorrichtung (38) und/oder der Öffnungs- und Verriegelungsvorrichtung (39) verbunden ist, ein zweites Ende der elastischen Vorrichtung (50) mit einem zweiten Verankerungspunkt (31) verbunden ist, wobei der erste Verankerungspunkt und der zweite Verankerungspunkt in Bezug auf die Anlagefläche(n) fixiert sind.

11. Befestigungssystem nach einem der Ansprüche 1 bis 9, bei dem ein zweites Ende (337) des Gurts mit dem ersten Ende der elastischen Vorrichtung verbunden ist.

12. Befestigungssystem nach einem der vorhergehenden Ansprüche, bei dem die elastische Vorrichtung (50) eine Feder umfasst.

13. Befestigungssystem nach einem der vorhergehenden Ansprüche, bei dem die elastische Vorrichtung mehrere elastische Unterelemente umfasst.

14. Befestigungssystem nach einem der vorhergehenden Ansprüche, ferner umfassend eine Ausrichtungsvorrichtung (12), die ausgebildet ist, ein Ausrichten der Ausrüstung gemäß einer vordefinierten Ausrichtung unabhängig von einer Ausrichtung des Trägers zu ermöglichen.

15. Befestigungssystem nach Anspruch 6 und Anspruch 14, wobei die Ausrichtungsvorrichtung ausgebildet ist, zwischen der Ausrüstung (2) und der Positionierungsplatte (14) positioniert zu werden.

16. Befestigungssystem nach einem der vorhergehenden Ansprüche, ferner umfassend eine Umlenkrolle (33), über die der Gurt läuft.

17. Befestigungssystem nach einem der vorhergehenden Ansprüche, bei dem ein statischer Reibungskoeffizient des Gurts (35) an dem Träger (3) kleiner als 0,2 ist.

18. Ausrüstungseinheit, umfassend eine Ausrüstung und ein Befestigungssystem nach einem der vorhergehenden Ansprüche.

19. Ausrüstungseinheit nach Anspruch 18, wobei die Ausrüstung ein Telekommunikationsmodul ist.

20. Verfahren zur Befestigung einer Ausrüstung (2) an einem Träger (3), wobei das Verfahren ein Befestigungssystem (1) nach einem der vorhergehenden Ansprüche einsetzt und die Schritte umfasst:

    - Positionieren der Anlagefläche(n) (20, 21) des Befestigungssystem an dem Träger;
    - Umschließen des Trägers mit dem Gurt (35);
    - Ziehen an dem ersten Ende des Gurts bis zu einem Anschlag der elastischen Vorrichtung (50).

## Claims

1. A fastener system (1) arranged to fasten a piece of equipment (2) on a support (3), the fastener system comprising:

    · a strap (35) for surrounding the support and holding the fastener system on the support;
    · a resilient device (50) and a mechanical abutment (52);
    · an adjustment device (38) for adjusting a length of the strap;
    · at least one bearing surface (20, 21);

the fastener system being arranged in such a manner that, when the bearing surface is positioned against the support and the strap surrounds the support, it responds to a manual pulling action on a first end (36) of the strap by the adjustment device adjusting the length of the strap to the size of the support, and then by the strap acting on a first end of the resilient device, which is then subjected to elongation generating a tension force in the strap serving to tighten strap around the support, with the mechanical abutment limiting the elongation of the resilient device in order to impart a predetermined value on the tension force.

2. A fastener system according to claim 1, further comprising an opening-and-locking device (39) arranged to respond to an opening manual action by opening the fastener system and thus enabling the strap to be positioned around the support, and to respond to a locking manual action by re-closing and locking the fastener system.

3. A fastener system according to claim 2, wherein the adjustment device (38) and the opening-and-locking device (39) are incorporated in a single module.

4. A fastener system according to claim 3, wherein the module is an adjustable clip buckle (40).

5. A fastener system according to claim 1, including, for at least one of the bearing surfaces, a slot (24, 27) defining two distinct bearing portions of said bearing surface, the strap (35) being capable, depending on the size of the support, of passing through the slot between said bearing portions.

6. A fastener system according to any preceding claim, having two bearing surfaces (20, 21) and a positioning mount (14) with two plates (18, 19) on which the two bearing surfaces (20, 21) are formed, the positioning mount having two side surfaces (16) to which and between which the plates are fastened.

7. A fastener system according to claim 6, wherein the bearing surfaces (20, 21) are mutually perpendicular.

8. A fastener system according to claim 6, wherein the resilient device (50) is positioned, at least in part, between the positioning mount (14) and the piece of equipment (2).

9. A fastener system according to any preceding claim, each bearing surface including a non-slip pad (453).

10. A fastener system according to any preceding claim, wherein a second end (37) of the strap (35) is connected to a first anchor point (30), the first end of the resilient device (50) is connected to the adjustment device (38) and/or to the opening-and-locking device (39), a second end of the resilient device (50) is connected to a second anchor point (31), and the first and second anchor points are in positions that are fixed relative to the bearing surface(s).

11. A fastener system according to any one of claims 1 to 9, wherein a second end (337) of the strap is connected to the first end of the resilient device.

12. A fastener system according to any preceding claim, wherein the resilient device (50) comprises a spring.

**13.** A fastener system according to any preceding claim, wherein the resilient device is made up of a plurality of distinct resilient sub-elements.

**14.** A fastener system according to any preceding claim, further comprising a swivel device (12) arranged to enable the piece of equipment to the swiveled into a predefined orientation regardless of the orientation of the support.

**15.** A fastener system according to claim 6 and claim 14, the swivel device being arranged to be positioned between the piece of equipment (2) and the positioning mount (14) .

**16.** A fastener system according to any preceding claim, further comprising a deflector roller (33) via which the strap passes.

**17.** A fastener system according to any preceding claim, wherein the strap (35) has a coefficient of static friction on the support (3) that is less than 0.2.

**18.** An equipment assembly comprising both a piece of equipment and a fastener system according to any preceding claim.

**19.** An equipment assembly according to claim 18, the piece of equipment being a telecommunications module.

**20.** A method of fastening a piece of equipment (2) on a support (3), the method making use of a fastener system (1) according to any one of claims 1 to 17 and comprising the steps of:

· positioning the bearing surface(s) (20, 21) of the fastener system on the support;
· surrounding the support with the strap (35);
· pulling on the first end of the strap until the resilient device (50) comes into abutment.

EP 4 148 286 B1

Fig. 1

13

Fig. 2

Fig. 3

Fig. 4

Fig. 5

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6185303 B1